# EUROPEAN PATENT SPECIFICATION

(11) **EP 0 376 902 B1**
(45) Date of publication and mention of the grant of the patent: **08.09.1993**
(21) Application number: 89830555.2
(22) Date of filing: 19.12.1989
(51) Int. Cl.: F16H 59/04

(54) **Gearbox operating unit for commercial vehicles**
Getriebesteuereinheit für Nutzfahrzeuge
Unité de commande d'une boîte de vitesse pour véhicules utilitaires

(30) Priority: 27.12.1988 IT 5364588 U
(43) Date of publication of application: 04.07.1990
(73) Proprietor: IVECO FIAT S.p.A., 10156 Torino (IT)
(72) Inventor: Bruno, Marco, I-10050 Chiusa di San Michele (Torino) (IT)
(74) Representative: Bosotti, Luciano

(56) References cited:
- WO-A-87/03255
- GB-A- 2 006 898
- US-A- 2 390 711
- US-A- 3 489 028

## Description

The present invention relates to a gearbox operating unit for commercial vehicles, of the type including a pair of operating levers connected together with the interposition of a joint and articulated with the structure of the vehicle by means of a connecting rod.

The use of two operating levers for connecting the manual gear lever to the selector of the gearbox results both from the exigencies of bulk and the need to facilitate the tilting of the cab when it is necessary to work on the engine. The current solution provides for the use of a first operating lever terminating at the selector and provided, close to the universal joint connecting it to the second lever, with a ball joint connected to a connecting rod articulated with the power unit. The use of such a connecting rod is necessary in order to enable the transmission both of rotational movements coaxial with the levers and backward and forward movements for the selection and engagement of the various ratios of the gearbox in known manner.

Document US-A-3 489 028 discloses a gearbox operating unit of the type indicated above, wherein the two operating levers are connected together by means of a ball joint. The connecting rod is pivotally connected to the end of the first lever near to the ball joint and is articulated with the vehicle structure by means of a second ball joint.

The use of a universal joint and a ball joint associated with one of the levers, as well as the solution illustrated in US--A-3 489 028, complicates the manufacture of the operating unit to some extent, due to the presence of a large number of parts.

Moreover, the selection of the gears is somewhat imprecise.

The object of the present invention is to provide an operating unit of the type specified at the beginning of the description, which does not have these disadvantages and which is simple and cheap to manufacture.

According to the invention, this object is achieved by virtue of the fact that the joint includes a central spherical member with two opposite diametral appendages which are articulated with one end of the connecting rod whereas the operating levers are articulated with the connecting rod via the spherical member in correspondence with the joint.

Thus, in addition to a reduction in the number of parts constituting the operating unit and consequently in its cost, greater precision is achieved in the selection of the ratios in that the fulcrum for the selection of the gears is located at a single point, at the centre of the spherical member.

Further advantages and characteristics of the operating unit according to the invention will become apparent from the detailed description which follows, provided purely by way of non-limiting example, with reference to the appended drawings, in which:
Figure 1 is a side view of a gearbox operating unit according to the invention,

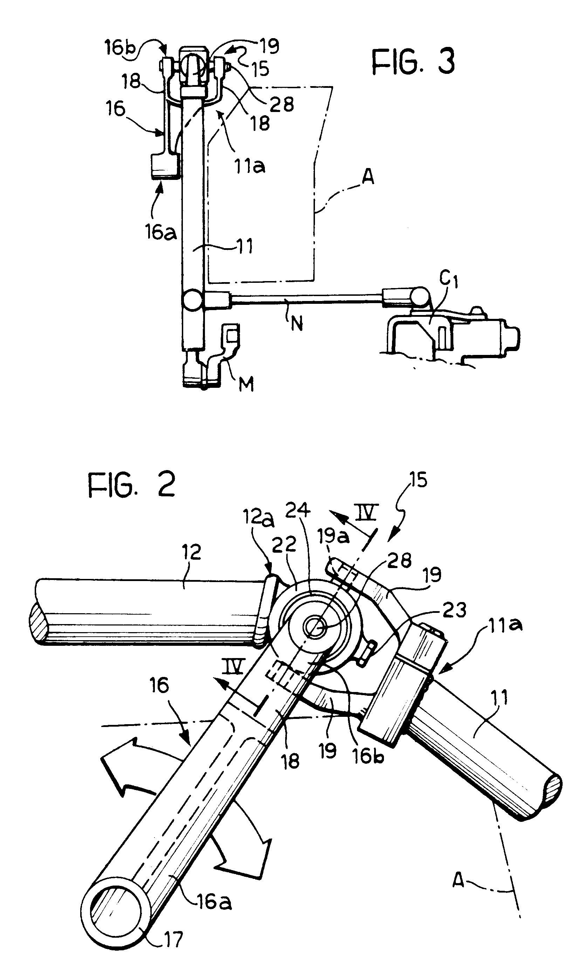

Figure 2 is a detail of Figure 1 on an enlarged scale,
Figure 3 is a view taken on the arrow III of Figure 1,
Figure 4 is a section taken on the line IV-IV of Figure 2, and
Figure 5 is an exploded perspective view of the detail illustrated in Figure 4.

With reference to the drawings, an operating unit for operating the gearbox C of a commercial vehicle is generally indicated 10 and includes first and second operating levers, 11 and 12 respectively, interposed between the selector of the gearbox C and the manual gear lever, indicated L in the drawings, located in the driving cab of the vehicle.

As is known, the manual gear lever L has a ball joint S housed in a spherical seat M fixed to the structure of the vehicle and a lower actuating end 13 articulated at 14 with the second operating lever 12. The latter has one end 12a, opposite the end articulated with the manual gear lever L, connected by a joint 15 to one end 11a of the first operating lever 11.

The joint 15, the particular conformation of which will be described below, is articulated with the structure A of the vehicle, in this instance the engine block, by means of a connecting rod 16. The latter has a first end 16a articulated at 17 with the structure A of the vehicle about an axis X-X which is substantially perpendicular to the longitudinal axis of the engine, and a second, forked end 16b defining a pair of arms 18. The joint 15 includes a fork 19 fixed to the end 11a of the first operating lever 11 and provided with two seats 19a for housing pins 20a carried by an annular member 20 coaxial with a tubular body 21. The latter has ends 21a housed rotatably in bushes 22a fixed to the end 12a of the second operating lever 12 about an axis Y-Y substantially perpendicular to the lever itself. The bushes 22a, which in essence constitute the "fork" 22 of the second operating lever 12 corresponding to the fork 19 of the first lever 11, are spaced from each other so as to enable the annular member 20 to be housed in the space between them, coaxially with the tubular body 21 and fixed thereto during assembly by means of a threaded dowel 23. The tubular body 21 and the annular member 20 fixed thereto thus constitute the "cross" of the joint 15, the arms of the cross being defined by the pins 20a connected to the annular member 20 and by the ends 21a of the tubular body 21 rotatably housed within the bushes 22a.

The tubular body 21 has an inner wall portion 21b shaped as a spherical seat and arranged to house a spherical member 24 having diametral appendages 24a in correspondence with which a through-hole 25 is formed. The diametral appendages 24a of the spherical member 24 are substantially in contact with the arms 18 of the forked end 16b of the connecting rod 16. The inner wall of the tubular body 21 also has an annular seat 26 for housing a resilient split ring 27 for retaining the spherical member 24 in its seat 21b. The through-hole 25 in the spherical member 24 houses a through-pin 28 constituted, for example, by a bolt, the ends of which are inserted in suitable holes 29 formed in the arms 18 of the forked end 16b of the connecting rod 16.

The joint 15 is assembled by means of the insertion of the tubular body 21 coaxially in the bushes 22a after the annular member 20 has been disposed coaxially with the axis Y-Y. The spherical member 24 is inserted in the tubular body 21 and is then prevented from leaving the spherical seat 21b by means of the resilient split ring 27 housed in its annular seat 26. The joint 15 is then fixed to the connecting rod 16 by means of the pin 28 which passes through the hole 25 in the spherical member 24.

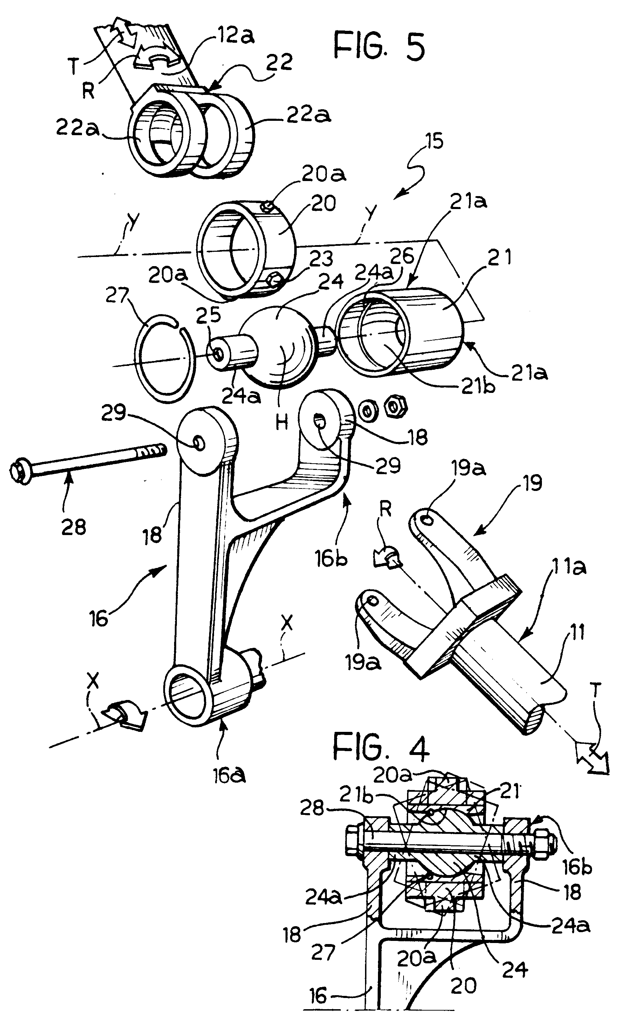

As illustrated clearly in Figure 4, the spherical member 24 associated with its seat 21b allows the joint 15 to transmit the small rotational movements needed for the selection of the gears, indicated by the arrows R in the drawings, while fixing the joint securely to the structure of the vehicle. This fixing enables "axial" movements to be transmitted, these being shown by the arrows T in the drawings. The axial movements of the levers 11 and 12 drives the auxiliary lever M of the selector of the gearbox C, while the coaxial rotation R of the levers drives the further component C₁ of the selector through an arm N.

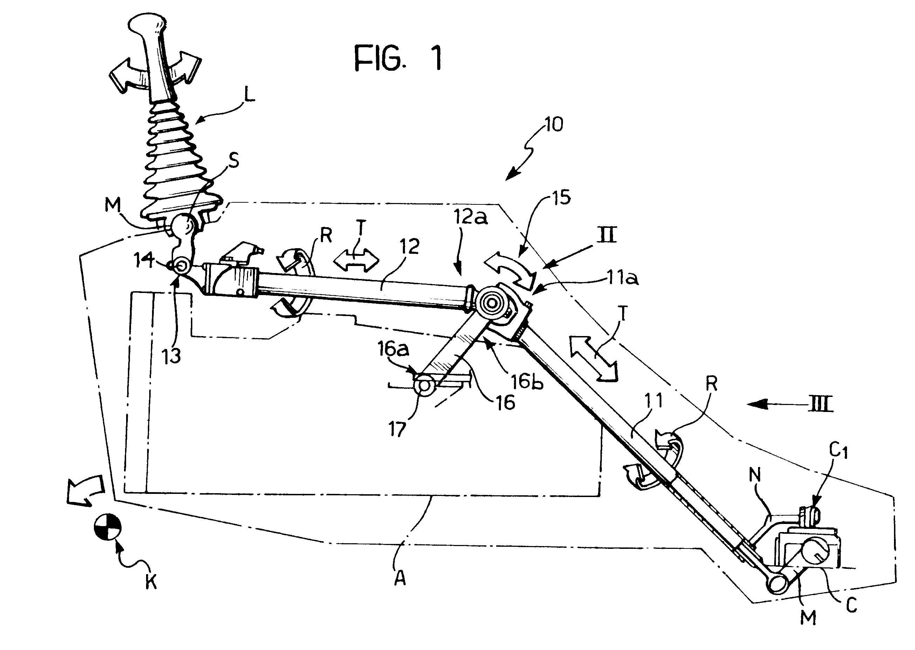

When it is necessary to tilt the vehicle cab about an axis indicated K in Figure 1, the positions of the first lever 11 and the connecting rod 16 do not vary, while the second lever 12 rotates about an axis defined by the pin 28 in a telescopic manner.

The operating unit 10 has a single gear-selection fulcrum located in correspondence with the point H at the centre of the spherical member 24. This improves reliability, the precision of the whole operating unit, and eliminates the component forces caused by the different positions of the fulcrum relative to the centre of rotation.

## Claims

1. A gearbox operating unit for commercial vehicles, including a pair of operating levers (11, 12) connected together with the interposition of a joint (15) and articulated with the structure of the vehicle by means of a connecting rod (16), characterised in that the joint (15) includes a central spherical member (24) with two opposite diametral appendages (24a, 28) which are articulated with one end (16b, 18) of the connecting rod (16) whereas the operating levers (11, 12) are articulated with the connecting rod (16) via the spherical member (24) in correspondence with the joint (15).

2. An operating unit according to Claim 1, characterised in that the joint (15) includes a cross with a tubular body (20, 21) provided, on its outer lateral surface, with a pair of opposed pins (20a) for articulation to a fork (19) connected to one end (11a) of a first lever (11), the ends (21a) of the tubular body (20, 21) being rotatably housed in corresponding cylindrical seats (22a) in the form of bushes connected to one end (12a) of a second lever (12), the spherical member (24) being housed within the tubular body (20, 21).

3. An operating unit according to Claim 2, characterised in that the tubular body (21) has a central, outer, annular shoulder (20) interposed between the cylindrical seats (22a).

4. An operating unit according to Claim 2, characterised in that the tubular body (20, 21) has an internal surface portion (21b) formed as a spherical seat corresponding to the spherical member (24), the diametral appendages (24a) of the spherical member (24) projecting from the ends (21a) of the tubular body (21) to cooperate with a fork portion (16b) of the connecting rod (16).

5. An operating unit according to Claim 4, characterised in that the diametral appendages of the spherical member (24) are constituted by the ends of a pin (28) coaxial with a central through-hole (25) in the member itself.

## Patentansprüche

1. Getriebesteuereinheit für Nutzfahrzeuge mit einem Paar Steuerhebel (11, 12), die durch Zwischenschaltung eines Gelenks (15) zussmmengehalten und mit dem Fahrzeug selbst mittels einer Verbindungsstange (16) verbunden ist,
dadurch gekennzeichnet,
daß das Gelenk (15) ein zentrales Kugelstück (24) mit zwei entgegengesetzt angeordneten Verlängerungsstücken (24a, 28) umfaßt, wobei diese mit einem Ende (16b, 18) der Verbindungsstange (16), die Steuerhebel (11, 12) jedoch mit der Verbindungsstange (16) über das Kugelstück (24) zusammen mit dem Gelenk (15) verbunden sind.

2. Steuereinheit nach Anspruch 1, dadurch gekennzeichnet, daß das Gelenk (15) ein Kreuzstück mit rohrförmigem Schaft (20, 21) umfaßt, welches an seiner äußeren Seitenwand ein Paar entgegengesetzt angeordneter Stifte (20a) zur Verbindung mit einer Gabei (19) aufweist, die mit einem Ende (11a) eines ersten Hebels (11) verbunden ist, wobei die Enden (21a) des rohrförmigen Schafts (20, 21) drehbar untergebracht sind in entsprechenden zylindrischen Sitzen (22a) in Form von mit einem Ende (12a) eines zweiten Hebels (12) verbundenen Buchsen, wobei das Kugelstück (24) innerhalb des rohrförmigem Schafts (20, 21) untergebracht ist.

3. Steuereinheit nach Anspruch 2, dadurch gekennzeichnet, daß der rohrförmige Schaft (21) einen zentralen, äußeren, ringförmigen Absatz (20) zwischen den zylindrischen Sitzen (22a) aufweist.

4. Steuereinheit nach Anspruch 2, dadurch gekennzeichnet, daß der rohrförmige Schaft (20, 21) einen inneren Oberflächenabschnitt (21b) aufweist, der als ein dem Kugelstück (24) entsprechender sphärischer Sitz ausgebildet ist, wobei die entgegengesetzten Verlängerungsstücke (24a) des Kugelstücks (24) von den Enden (21a) des rohrförmigen Schafts (21) vorragen, um mit einem Gabelabschnitt (16b) der Verbindungsstange (16) zusammenzuwirken.

5. Steuereinheit nach Anspruch 4, dadurch gekennzeichnet, daß die entgegengesetzten Verlängerungsstücke des Kugelstücks (24) gebildet sind aus den Enden eines Stifts (28), der mit einer Durchgangsbohrung (25) durch dieses Stück koaxial angeordnet ist.

## Revendications

1. Unité de commande d'une boîte de vitesses pour véhicules utilitaires, comportant une paire de leviers d'actionnement (11, 12) reliés l'un à l'autre avec interposition d'un joint (15), et articulés sur le corps du véhicule au moyen d'une tige de liaison (16), caractérisée par le fait que le joint (15) présente une pièce sphérique centrale (24), munie de deux appendices diamétraux opposés (24a, 28) qui sont articulés sur l'une (16b, 18) des extrémités de la tige de liaison (16), tandis que les leviers d'actionnement (11, 12) sont articulés sur la tige de liaison (16) par l'intermédiaire de la pièce sphérique (24), dans l'alignement du joint (15).

2. Unité de commande selon la revendication 1, caractérisée par le fait que le joint (15) présente un croisillon comportant un corps tubulaire (20, 21) muni, sur sa surface latérale externe, d'une paire de tétons opposés (20a) en vue de l'articulation sur une fourchette (19) reliée à l'une (11a) des extrémités d'un premier levier (11), les extrémités (21a) du corps tubulaire (20, 21) étant montées, à rotation, dans des logements cylindriques correspondants (22a) revêtant la forme de coussinets reliés à l'une (12a) des extrémités d'un second levier (12), la pièce sphérique (24) étant logée à l'intérieur du corps tubulaire (20, 21).

3. Unité de commande selon la revendication 2, caractérisée par le fait que le corps tubulaire (21) comporte un épaulement annulaire (20), central et externe, interposé entre les logements cylindriques (22a).

4. Unité de commande selon la revendication 2, caractérisée par le fait que le corps tubulaire (20, 21) présente une zone superficielle interne (21b) revêtant la forme d'un logement sphérique correspondant à la pièce sphérique (24), les appendices diamétraux (24a) de la pièce sphérique (24) faisant saillie au-delà des extrémités (21a) du corps tubulaire (21), pour coopérer avec une région fourchue (16b) de la tige de liaison (16).

5. Unité de commande selon la revendication 4, caractérisée par le fait que les appendices diamétraux de la pièce sphérique (24) sont constitués par les extrémités d'une broche (28), coaxiale à un trou central traversant (25) ménagé dans la pièce proprement dite.
